# EUROPEAN PATENT SPECIFICATION

(11) **EP 0 450 751 B1**
(45) Date of publication and mention of the grant of the patent: **16.12.1998**
(21) Application number: 91301347.0
(22) Date of filing: 20.02.1991
(51) Int. Cl.: G06F 7/50, G06F 7/52

(54) **High speed digital divider**
Schneller digitaler Dividierer
Diviseur numérique rapide

(30) Priority: 02.04.1990 US 505350
(43) Date of publication of application: 09.10.1991
(73) Proprietor: ADVANCED MICRO DEVICES, INC., Sunnyvale, CA 94088-3453 (US)
(72) Inventor: Shah, Salim A., Austin, Texas (US); Lynch, Thomas W., Austin, Texas 78722 (US)
(74) Representative: Sanders, Peter Colin Christopher

(56) References cited:
- EP-A- 0 040 279
- US-A- 3 621 218
- US-A- 4 084 254
- US-A- 4 503 512

## Description

This invention relates to a dividing apparatus and, more particularly, to a high-speed dividing apparatus for electronic digital computers.

A carry save adder (CSA) is distinguished from other types of adders by the fact that the carry bits and half-sum bits which result from each addition are not immediately combined or consolidated but instead are saved separately from each other for subsequent use in the next addition performed by the CSA, the inputs to which comprise the saved carry and half-sum bits (the latter hereinafter referred to simply as "sum bits" for convenience) and the bits of an operand which is being added to, or in some instances being effectively subtracted from, the value jointly represented by these saved carry and sum bits.

Carry save adders commonly are employed in high-speed multipliers, where they generally are able to function more rapidly than "carry propagate" or "ripple carry" adders because a carry save adder does not completely perform the relatively time-consuming process of combining carries with sum bits between successive additions in the multiplication process but instead defers this task until the final cycle of the multiplying operation. It has been proposed also to use a carry save adder in dividing operations, as disclosed in U.S. Patent 4,084,254 to R. E. Birney et al,, the advantage of this proposal being that it enables a combination multiplier-divider unit to be provided with a single adder of the CSA type for use in both multiplying and dividing operations.

As they generally are employed, carry save adders have a disadvantage that has detracted from their utility despite the above-described speed advantage which they offer. There are many instances during the performance of adding, complementing and column shifting functions where a carry or sum bit manifested at the output side of any order or bit position in the adder must be re-entered as input to that same order or bit position in the adder. Because of this re-entrancy requirement, it has been customary to provide carry save adders in duplicate and operate the pair of adders in alternation so that an output bit from any order or position in one adder of the pair may, if necessary, be applied as input to the corresponding order or position in the other adder of the pair, without thereby causing an undesirable interaction between an output bit and its re-entered counterpart at the same CSA bit position. This duplication of adder equipment introduces a cost consideration which must be weighed against the speed consideration in a conventional CSA installation. While it is desirable to eliminate the use of duplicate adder equipment and employ a single CSA having only one ordered set of bit positions for achieving the results described above, this must be accomplished without impairing the ability of the CSA to perform all of the functions required of it. In particular, some way must be provided for handling the re-entrancy problem where there is no duplicate set of CSA bit positions available for that purpose.

Where a carry save adder is being used as part of a divider apparatus, as proposed in the aforesaid Birney et al. patent, there is an additional requirement that the CSA must provide information that can be used in a lookahead logic network to determine beforehand from the various CSA output values whether or not each proposed complemental subtraction in the division process may be successfully performed without causing an overdraft. For this purpose each CSA bit position must provide two types of output bits: (1) latched sum and carry output bits which can be set or changed only at predetermined clock times, being stable at all other times; and (2) unlatched sum and carry bits (hereinafter referred to as "presum" and "precarry" bits), whose respective values at every instant will be determined by the instantaneous values of the current inputs to that CSA bit position, the latter being used in making the trial determinations to prevent the occurrence of overdrafts. The conventional carry save adder cannot provide both latched and unlatched outputs from the same bit cell.

In the course of normal operation, a digital computer performs numerous calculations including addition, subtraction, multiplication, and division. Division is, by far, the most complex of these operations, typically requiring more hardware and computational time than the other operations. The prior art provides a variety of division techniques, which have in common the utilization of an iterative method for quotient production The iterative method generally involves generating a single quotient digit in each iterative cycle. Three of the prior art techniques are discussed below.

A restoring division technique is characterized by the selection of quotient digits in the range 0, 1,..., (beta - 1); where beta is the radix of the division. Thornton, "Design of a Computer-The Control Data 6600", (Scott, Foresman and Co., Glenview, Ill., 1970, pp. 101-105) discloses a radix - 4 divider employing this division technique. The apparatus incorporates three adder/subtractor units for the simultaneous calculation of candidate divisor multiples and operates according to a method similar to that of manual, pencil-and-paper division.

A second division technique, non-restoring division, is characterized by the selection of quotient digits having the values - (beta-1),..., -2, -1, 1, 2,..., (beta -1). A procedure employing a modified form of this technique is discussed by Nandi et al. in "A Simple Technique for Digital Division" (Communications of the ACM, No. 10, 1967, pp. 299-301). In the quotient digit-producing iterative phase, the Nandi et al. method generates successive "partial remainders," values reflecting the difference between the numerator and the multiplicative product of the denominator and the previously generated quotient digits. Within the iterative phase, a single radix - beta quotient digit is generated as a mathematical function of each partial remainder.

A variant of the non-restoring division technique is provided by SRT division, which is also characterized by the selection of quotient digits in the range - (beta-1),..., -1, 0, 1,..., (beta-1). A discussion of the SRT technique is provided by Robertson, "A New Class of Digital Division Methods," IRE Transactions on Electronic Computers, vol. EC-7, pp. 218-222, Sept., 1958. The Robertson method employs an iterative process similar to that used by the Nandi et al. However, in Robertson, each quotient digit is generated by operation of a selection circuit, which incorporates a large look-up table.

Drawbacks presented by the prior division methods are numerous. In Thornton, for example, the performance increases do not offset the costs associated with the increased hardware requirements. Both Robertson and Nandi et al. generate quotient digits in a manner which requires increased hardware in order to achieve conversion of individual quotient digits to a conventional, restoring form. Nandi et al., further requires examination, in some cases, of two leading radix - beta digits of a partial remainder in order to produce a single quotient digit. Moreover, the Robertson method requires a look-up table having a size which rapidly increases as a function of increased radix. Further, this method requires a large data path length, i.e., the bit-wise length of signals transferred between divider elements.

US-A-4,084,254 discloses a divider for performing digital division, the divider comprising a carry save adder and a quotient prediction logic circuit, the adder receiving partial remainder sum signals, partial remainder carry signals, and true and complement functions of a plurality of data values to be processed by the adder.

US-A-4,503,512 discloses a cellular division circuit including a first adder for adding a dividend and a divisor thereby forming a first remainder and a second adder for adding the dividend with the complement of the divisor thereby forming a second remainder, the circuit includes means for complementing the highest order bit of each of the first and second remainders thereby forming first and second quotient bits. A selector circuit is provided for selecting the first or second quotient bits and for selecting the first or second remainders in response to a first selection signal.

US-A-3,621,218 discloses a divider made up of a first pair of registers, a decoder, a pair of gate circuits, a carry save adder and a second pair of registers. The decoder produces a partial quotient in response to the upper parts of sum and carry signals representative of a partial remainder held in the first pair of registers. The carry save adder adds the partial remainder shifted upwards by one figure with either of divisor, zero or the complement of divisor selected by the pair of gate circuits in response to the partial quotient and produces new sum and carry signals representative of a new partial remainder to replace the previous partial remainder in the first pair of registers therewith. Thus, the second pair of registers holds in succession the sequence of partial quotients produced by the decoder.

EP-A-0,040,279 discloses a binary divider comprising: an enable register for receiving a dividend; a divisor register for receiving a divisor; a generate register; and first and second carry-save adders. The first adder is connected to receive inputs from the enable register, divisor register and generate register, and the second adder is connected to receive inputs from the enable register, the complement of the divisor register and the generate register. Means are provided for determining the sign of a current partial remainder connected to the first and second adders, and a sign record flip-flop stores the sign of the preceding partial remainder. An adder select gate gates the outputs of one of the adders for a further cycle of the division process, and a quotient shift register stores quotient bits as they are developed.

According to the present invention there is provided a divider for performing high-speed digital division, the divider comprising a carry save adder and a quotient prediction logic circuit, the adder receiving partial remainder sum signals, partial remainder carry signals, and true and complement functions of a plurality of data values to be processed by the adder, characterised in that the adder performs all possible additions of the received signals and a proper one of the said additions is selected by multiplexing means responsive to signals received from the quotient prediction logic circuit, the multiplexing means being connected in a feedback loop with the quotient prediction logic circuit whereby the operation of the carry save adder and the operation of the quotient prediction logic circuit are overlapped to increase the speed of the division.

In the accompanying drawings, by way of example only:-
Fig. 1 is a block diagram of a prior art carry save adder configuration;
Fig. 2 is a block diagram of a new carry save adder configuration, having a shorter iterative delay than the configuration of Fig. 1;
FIG. 3 is a block diagram of a special carry save adder configuration according to the teachings of the present invention; and
FIG. 4 is a more detailed, schematic diagram of the adder shown in FIG. 3.

As should now be understood, the present adder addresses the problem of too much time being consumed in SRT and NR division for a quotient prediction logic block to produce signals to start each new iteration based on the results (the partial remainder) of the previous iteration. The present adder provides a solution to this problem.

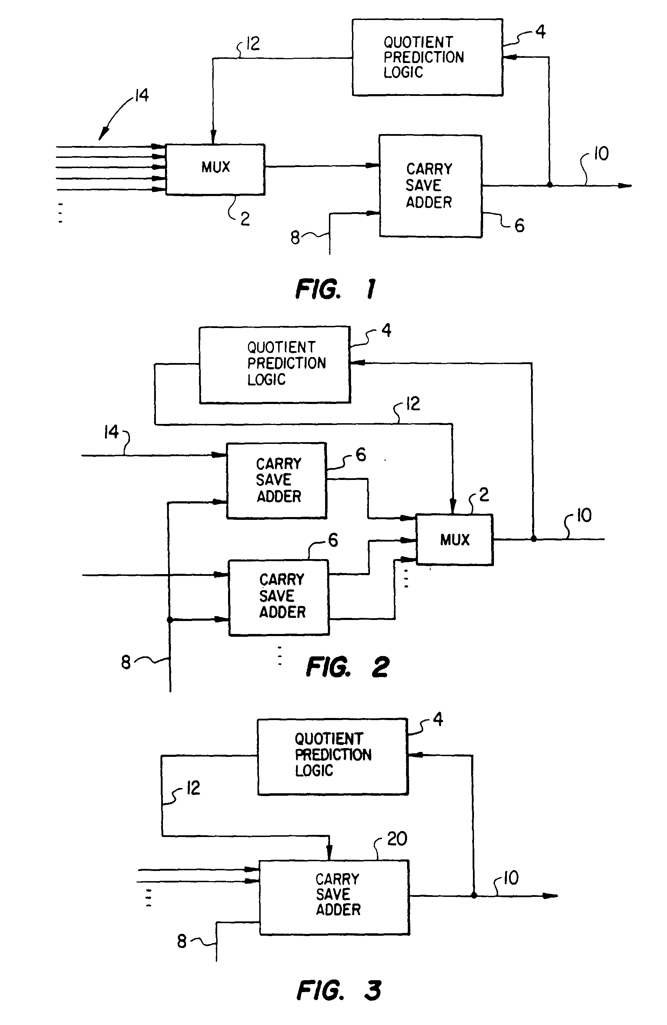

Once a minimum circuit is found for the quotient prediction logic, the only way to reduce iteration time is to overlap the CSA operation with the quotient prediction calculations. To appreciate this better, reference made now be had to FIG. 1, wherein a prior art carry save adder configuration may be seen to comprise a multiplexer 2, carry save adder 6, and quotient prediction logic block 4. During operation of such a configuration, a partial remainder PRᵢ is input to the adder 6 via line 8 and a partial remainder PRᵢ₊₁ is output on result line 10. Between block 4 and multiplexer 2 are quotient select lines 12. Additionally, multiplexer 2 has a number of inputs 14 thereto, the exact number of which depends upon the radix employed in the overall configuration. With such an overall configuration, total time delay is equal to the sum of the time delays in the adder 6, block 4, and multiplexer 2. With this understood, it should be appreciated that if the time delay of block 4 and adder 6 could be made to "overlap", the overall configuration would have a shorter total time consumption.

One way to effect the overlap mentioned above would be to use multiple CSA's and then multiplex out the correct answer at the end. Such a configuration is shown in FIG. 2 wherein sum and carry signals PRᵢ are input to multiple adders (only two of which are shown) via line 8 and the output PRᵢ₊₁ leaves the multiplexer 2 via line 10. Because the adders 6 can operate at the same time as the block 4 and because use of multiple adders ensures the correct values will be produced for determination by the multiplexer 2, CSA delay time may be neglected and the total iteration time considered to be the sum of the block 4 delay and the multiplexer 2 delay.

The problem with the solution proposed immediately above and shown in FIG. 2 is that for high radix divides such a solution would be very expensive in terms of transfer count and chip area. The solution shown in FIG. 2, may be considered to be an expensive, fast solution to the problem solved by the present invention.

Referring now to FIG. 3, an overall configuration including a special carry save adder 20 according to the teachings of the present invention is shown therein. The special carry save adder 20 according to the present invention should be understood to perform multiplexing and three operand adding in one circuit. Iterative delay with such a configuration is the sum of the adder 20 delay and the block 4 delay, which would be much shorter than the delay of the prior art configuration shown in FIG. 1. Additionally, this new carry save adder 20 is much smaller than multiple CSA' s and a multiplexer; thus, it would be preferred in most applications to the configuration discussed above with reference to FIG. 2.

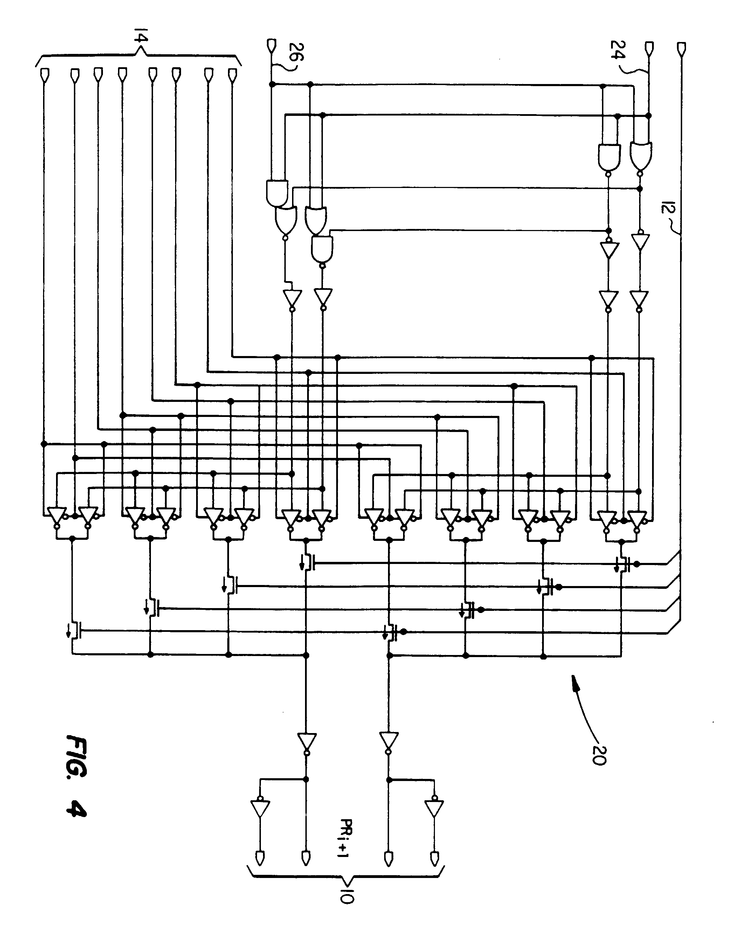

Referring now to FIG. 4, further details regarding adder 20 are depicted. With reference to FIG. 4, it should be appreciated that signals from the quotient prediction logic block 4 enter adder 20 via line 12, partial remainder sum signals enter the adder 20 via line 24, and partial remainder carry signals enter the adder via line 26. The various other inputs, generally designated by reference numeral 14 relate to the employed algorithm and radix, e.g., radix 4. In an embodiment of the present invention that has actually been constructed, these inputs are the true and complement functions of four different values, D0, D1, D2 and D3. Having these functions available with the sum and carry values allows independent calculation of all possible additions to be made within an adder according to the present invention. Therefore, once an indication is available as to the proper selection to be made among the various values, all data is available to make that proper selection. The partial remainder output, PRᵢ₊₁, leaves adder 20 via lines 10.

Referring to FIG. 4, those skilled in the art should appreciate that since quotient prediction time dominates, delay through the new adder 20 may be measured at one gate delay. Further, it should be appreciated that the circuit shown in FIG. 4 is much smaller than multiple CSA's leader to a multiplexer because of shared logic among two the input terms, PR sumᵢ and PR carᵢ, that would be replicated may times in an alternative implementation. Effectively, all of the common partial remainder inputs into all of the CSA's in FIG. 2 are shared in the embodiment of the present invention. Such sharing of inputs also allows common determination of output to be accomplished, eliminating the need for an independent multiplexer.

Based on the foregoing, those skilled in the art should understand that the present divider reduces the iteration time by two gate delays in the main iteration path. The present divider is also relatively inexpensive, at least in comparison to methods employing adding and then selecting operations.

## Claims

1. A divider for performing high-speed digital division, the divider comprising a carry save adder (20) and a quotient prediction logic circuit (4), the adder (20) receiving partial remainder sum signals, partial remainder carry signals, and true and complement functions of a plurality of data values to be processed by the adder, characterised in that the adder (20) performs all possible additions of the received signals and a proper one of the said additions is selected by multiplexing means (2) responsive to signals (12) received from the quotient prediction logic circuit (4), the multiplexing means being connected in a feedback loop with the quotient prediction logic circuit whereby the operation of the carry save adder and the operation of the quotient prediction logic circuit are overlapped to increase the speed of the division.

2. A divider according to claim 1 wherein the quotient prediction logic signals (12) are separated into four separate signal paths in the carry save adder (20), the multiplexing means (2) comprise eight multiplexers, and the true and complement functions of the data values to be processed by the adder are received on a first four input lines and a second four input lines respectively.

3. A divider according to claim 2 wherein the partial remainder sum and carry signals are each received on only one respective initial input line, the receiver signals sharing input term logic so as to support eight separate additions, four with the true functions and four with the complement functions, respectively.

4. A divider according to any one of the preceding claims wherein the plurality of data values consists of four values.

## Patentansprüche

1. Dividierer zum Durchführen einer Hochgeschwindigkeits-Digitaldivision, mit einem Übertrag-Ablage-Addierer (20) und einer Quotientenvorhersage-Logikschaltung (4), wobei der Addierer (20) Teil-Restsummen-Signale, Teil-Rest-Übertrag-Signale, und Wahr- und Komplement-Funktionen mehrerer von dem Addierer zu verarbeitenden Datenwerte empfängt, dadurch gekennzeichnet, daß der Addierer (20) sämtliche möglichen Additionen der empfangenen Signale durchführt und eine Multiplexereinrichtung (2) auf Signale (12) hin, die aus der Quotientenvorhersage-Logikschaltung (4) empfangen werden, eine geeignete der Additionen wählt, wobei die Multiplexereinrichtung (2) in einer Rückkopplungsschleife mit der Quotientenvorhersage-Logikschaltung verbunden ist, wodurch sich der Betrieb des Übertrag-Ablage-Addierers mit dem Betrieb der Quotientenvorhersage-Logikschaltung zeitlich überlagert, um die Geschwindigkeit der Division zu erhöhen.

2. Dividierer nach Anspruch 1, bei dem die Quotientenvorhersage-Logik-Signale (12) in dem Übertrag-Ablage-Addierer (20) auf vier separate Signalpfade verteilt werden, wobei die Multiplexereinrichtung (2) acht Multiplexer aufweist, und die Wahr- und Komplement-Funktionen der von dem Addierer zu verarbeitenden Datenwerte auf ersten vier Eingangsleitungen bzw. zweiten vier Eingangsleitungen empfangen werden.

3. Dividierer nach Anspruch 2, bei dem die Teil-Restsummen-und Übertrag-Signale jeweils auf nur einer einzigen jeweiligen Anfangs-Eingabe-Leitung empfangen werden, wobei die Empfangssignale eine Eingabe-Term-Logik für acht getrennte Additionen gemeinsam benutzen, und zwar vier mit den Wahr-Funktionen bzw. vier mit den Komplement-Funktionen.

4. Dividierer nach einem der vorhergehenden Ansprüche, bei dem die Datenwerte vier Werte aufweisen.

## Revendications

1. Diviseur pour effectuer une division numérique à grande vitesse, le diviseur comprenant un additionneur à sauvegarde de report (20) et un circuit logique de prédiction de quotient (4), l'additionneur (20) recevant des signaux de somme de restes partiels, des signaux de report de restes partiels et des fonctions de complément et de vérité d'une pluralité de valeurs de données à traiter par l'additionneur, caractérisé en ce que l'additionneur (20) exécute toutes les additions possibles des signaux reçus et une addition correcte desdites additions est sélectionnée par des moyens de multiplexage (2) en réponse aux signaux (12) reçus à partir du circuit logique de prédiction de quotient (4), les moyens de multiplexage étant connectés dans une boucle de réaction avec le circuit logique de prédiction de quotient, de sorte que le fonctionnement de l'additionneur à sauvegarde de report et le fonctionnement du circuit logique de prédiction de quotient se superposent pour accroitre la vitesse de la division.

2. Diviseur selon la revendication 1 dans lequel les signaux logiques de prédiction de quotient (12) sont séparés en quatre chemins de signaux séparés dans l'additionneur à sauvegarde de report (20), les moyens de multiplexage (2) comprennent huit multiplexeurs et les fonctions de complément et de vérité des valeurs de données à traiter par l'additionneur sont reçues sur un premier ensemble de quatre lignes d'entrée et sur un second ensemble de quatre lignes, respectivement.

3. Diviseur selon la revendication 2, dans lequel les signaux de somme et de report de restes partiels sont reçus, chacun, sur une seule ligne d'entrée initiale respective, les signaux du récepteur partageant une logique des conditions d'entrée de façon à supporter huit additions séparées, quatre avec les fonctions de vérité et quatre avec les fonctions de complément, respectivement.

4. Diviseur selon l'une quelconque des revendications précédentes dans lequel la pluralité des valeurs de données est constituée de quatre valeurs.
